# EUROPEAN PATENT APPLICATION

(11) **EP 4 851 807 A1**
(43) Date of publication of application: **09.12.2026**
(21) Application number: 25223359.8
(22) Date of filing: 15.12.2025
(51) Int. Cl.: G06F 11/10

(54) **READ OPERATION IN A MEMORY MODULE**

(30) Priority: 06.06.2025 US 202563818754 P; 11.12.2025 US 202519415847
(71) Applicant: INTEL Corporation, Santa Clara, CA 95054 (US)
(72) Inventor: KWOK, Zion, Burnaby, V5H 4J3 (CA)
(74) Representative: Viering, Jentschura & Partner mbB Patent- und Rechtsanwälte

(57) **Abstract**

Various aspects relate to a method of operating a memory module, wherein the memory module includes a plurality of memory chips, wherein the method includes: carrying out a first read operation, wherein the first read operation includes: reading data from one or more memory chips among the plurality of memory chips while leaving out from the first read operation one or more further memory chips among the plurality of memory chips; carrying out an error detection on the data from the one or more memory chips; and if the error detection indicates an error condition of the data from the one or more memory chips, carrying out a second read operation, wherein the second read operation includes reading data from the one or more further memory chips.

## Description

### Cross-reference to related applications

This application claims the benefit of U.S. Provisional Patent Application No. 63/818,754, which was filed on June 06, 2025, the entire content of which is incorporated herein by reference.

### Technical Field

Various embodiments relate to a memory module, to a computing system including a memory module, and methods thereof, e.g., a method of operating a memory module (e.g., a method of carrying out a read operation of the memory module).

### Background

In general, a memory is a key component in an electronic system, as it enables the temporary or permanent storage of data and instructions for the operation of the electronic system. There are two main types of memory, i.e., volatile memories, which enable a quick access to the stored data but require continuous power to maintain the data, and non-volatile memories, which provide a slower data retrieval but are capable of maintaining the stored data even after the power has been turned off. In view of the increasingly data-intensive nature of modern applications, memory operations (e.g., to write data into a memory, or to read data from a memory) have a significant influence on the overall power consumption of an electronic system. Thus, strategies for providing resource-efficient memory operations are of particular interest for the further developments of modern devices.

### Brief Description of the Drawings

In the drawings, like reference characters generally refer to the same parts throughout the different views. The drawings are not necessarily to scale, emphasis instead generally being placed upon illustrating the principles of the proposed configuration. In the following description, various aspects are described with reference to the following drawings, in which:
FIG. 1 shows an exemplary memory module, in a schematic representation;
FIG. 2A shows an exemplary memory module, in a schematic representation;
FIG. 2B shows an exemplary memory chip, in a schematic representation;
FIG. 3A shows an exemplary computing system configured to carry out an adapted read operation of a memory module, in a schematic representation;
FIG. 3B and FIG. 3C show an exemplary configuration of the computing system configured to carry out an error correction, in a schematic representation;
FIG. 4 show the exemplary computing system further configured to carry out a write operation of the memory module;
FIG. 5 shows a schematic flow diagram illustrating an exchange of information associated with the read operation of the memory module; and
FIG. 6A, FIG. 6B, and FIG. 6C show an exemplary memory module, in a schematic representation.

### Description

The following detailed description refers to the accompanying drawings that show, by way of illustration, specific details and aspects in which the proposed configuration may be practiced. These aspects are described in sufficient detail to enable those skilled in the art to practice the proposed configuration. Other aspects may be utilized and structural, logical, and electrical changes may be made without departing from the scope of the proposed configuration. The various aspects are not necessarily mutually exclusive, as some aspects may be combined with one or more other aspects to form new aspects. Various aspects are described in connection with methods and various aspects are described in connection with devices (e.g., a memory module, a computing system). However, it is understood that aspects described in connection with methods may apply in a corresponding manner to the devices, and vice versa.

In modern electronics there is a constantly increasing demand for data storage and memory capacity. Modern applications (e.g., imaging, gaming, artificial intelligence, etc.) generate and process large amount of data, thus requiring solutions to enable storage of large data sets and to enable a quick access to the stored data. Illustratively, efficient data access and fast data transfer rates are of great importance to ensure the correct functionality and the smooth performance of data-intensive applications.

In this context, in view of the increasing volume of data that are stored and transferred, and in view of the increasing need for quick data transfer, memory operations may contribute in a significant manner to the power consumption of an electronic device. The increased power consumption may be of particular relevance in the context of mobile electronic devices, e.g., portable or wearable devices, which are generally constrained in terms of available power. In general, the increased power consumption may also lead to an increased temperature of the electronic device (e.g., of the memory chips involved in the frequent data transfers), which is an undesirable condition that may deteriorate the components of the device or provide an unpleasant experience for a user.

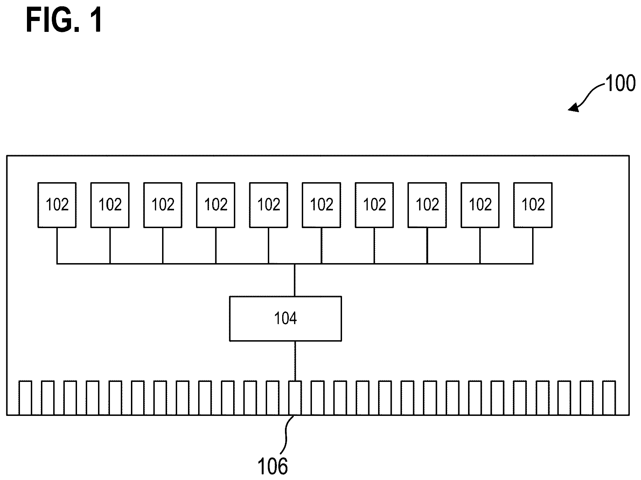

As an example, dynamic random-access memory (DRAM) is a type of volatile random-access memory that is widely adopted in many electronic devices for storing data (e.g., instructions, program code) that the processor of the device may quickly retrieve while executing applications. FIG. 1 shows an exemplary DRAM memory module 100, which includes a plurality of memory chips 102 coupled to a common bus. The DRAM memory module 100 further includes a registered clock driver (RCD) chip 104 that receives a chip select signal from a chip select pin 106 of the memory module 100 and manages the access to the memory chips 102 for writing data into the memory chips 102 and/or for reading data from the memory chips 102.

A DRAM memory module provides an attractive solution for data storage in an electronic device in view of its relatively simple architecture and its relatively low cost compared to other types of memories (e.g., static RAM, SRAM). In particular, modern designs of DRAM modules may include multiple ranks, i.e., multiple sets of DRAM chips, to increase the available storage space, and to enable storing redundancy data to facilitate maintaining data integrity and to facilitate error correction. Within a "rank", the memory chips may share the address signals and the command signals, e.g., the memory chips 102 may be connected to the same chip select, as shown in FIG. 1. Being connected to the same chip select pin 106, the memory chips 102 may be accessed simultaneously. Separate ranks may share data pins, and may be connected to separate chip select pins.

However, increasing the number of ranks and/or the number of memory chips 102 leads to a corresponding increase in the power consumption required for operating the memory module 100. For example, DRAM modules, e.g., the 10x4 DDR5 DIMMs (where DDR is an acronym for Double Data Rate, and DIMM is an acronym for Dual Inline Memory Module), provide a robust architecture for data storage but consume a relatively large amount of power. 10x4 DIMMs use more power than simpler architectures such as a 9x4 DIMM or a 5x8 DIMM or a DIMM that has no error-correcting code (ECC) devices.

There is thus a general need to reduce the power consumption associated with the operation of memory modules (e.g., of DRAM memory modules).

Existing solutions rely, for example, on reducing the number of memory components (e.g., the number of DRAM components), or on enabling partial reads, e.g., a read operation where not all memory chips are read (e.g., only 9 out of 10 for example), although not in the DRAM context but rather in 3D XPoint (3DXP) memory modules. However, further improvements may be beneficial to provide a resource-efficient operation of a memory module, without affecting its capabilities in terms of data storage (e.g., in terms of ensuring data integrity).

The configuration proposed herein is based on the realization that in general it is not necessary to read data from all the memory chips in a memory module (e.g., in a rank of the memory module) for every read operation. Illustratively, the proposed configuration is based on the realization that for verifying data integrity it may be sufficient to read data from a subset of the available memory chips, without reading (valid) data from all of them (illustratively, without accessing all of them). Thus, in a read operation, one or more (further) memory chips may be disabled or may remain disabled for the read operation (illustratively, for read-related commands), which leads to an overall reduced power consumption and an overall lower temperature for the operation of the memory module (and, accordingly, for the operation of an electronic device including the memory module).

In case an error is detected in the data retrieved from the memory chips accessed in the read operation, a further read operation (also referred to herein as "retry read operation" or "retry read") may be carried out, in which data are read also from the memory chips that were left out in the previous read operation. Illustratively, in the further read operation also the memory chips that were previously left out from the read operation are accessed (e.g., together with the other memory chips). The retrieval of data from all the chips may provide the possibility of carrying out an error correction to restore the data.

By way of illustration, the approach proposed herein may be understood as an adapted read operation, which includes a partial read in case no errors are detected in the data, and which includes a full read in case one or more errors are detected in the data. Illustratively, the proposed configuration includes a dynamic adaptation of the number of memory chips from which (valid) data are read in a read operation (e.g., the number of memory chips accessed in a read operation), in which one or more memory chips remain disabled for reading data therefrom until an error is detected and an error correction process should be performed.

The proposed configuration may thus provide a reduction in read power (e.g., column read power and read input/output power). Considering for example a scenario with ten memory chips, in which only nine of them are accessed in a read operation for reading the data stored therein, the proposed approach may provide up to 10% reduction of the read power. For example, for closed page policy, the proposed approach may reduce row activate power for reads, or may skip row activate for a series of reads. In general, the proposed approach may help with thermal constraints. Illustratively, the proposed approach may help to improve power-limited performance and/or make it easier to cool the device.

In an embodiment, the one or more further memory chips that are not accessed in a read operation for reading the data stored therein (unless an error correction should be carried out) may store redundancy data associated with the data stored in the memory chips that are accessed in the read operation. The proposed configuration may thus be based on the realization that data integrity may be assessed without necessarily retrieving in every read operation all of the redundancy data associated with certain data. The memory chip or memory chips storing redundancy data may thus be disabled for a read operation, without affecting the overall robustness of the data storage while providing a reduced power consumption.

In a preferred configuration, the memory chips from which data are read in a read operation (illustratively, the memory chips that are accessed) in a read operation may include one or more memory chips storing application data, and one or more memory chips storing a first portion of the redundancy data associated with the application data. The one or more memory chips from which data are not read in the (initial) read operation (illustratively, the memory chips that are not accessed in the read operation) may store a second portion of the redundancy data associated with the application data. The first portion of the redundancy data that is retrieved in the read operation may be insufficient for performing error correction, but may be sufficient for performing error detection. In case an error is detected, the second portion of the redundancy data may be accessed (illustratively, retrieved) in a further read operation, thus enabling an error correction to restore the integrity of the data.

The configuration proposed herein is applicable to any suitable type of memory module, e.g., a memory module configured according to any suitable architecture. In particular, the proposed configuration has been found to be particularly attractive in the context of DRAM modules. Thus, in the following particular reference may be made to the adapted read operation being carried out in a DRAM module, and terminology may be used that pertains to the particular context of DRAM. It is however understood that the applications of the adapted read operation are not limited to DRAM modules, and may generally be implemented also for other types of memory modules (e.g., volatile or non-volatile memory modules).

For example, a memory module (e.g., a DRAM module) adapted to realize the adapted read operation proposed herein may include a separate chip select (CS) signal to disable the one or more further memory chips (e.g., the memory chip or chips storing redundancy data) for a certain read operation (illustratively, to disable the memory chips for read-related commands). Considering for example a DRAM module with ten memory chips (e.g., a 10x4 DIMM), the separate chip select signal may be delivered to the tenth chip, which may thus be disabled for most DRAM reads. The one or more further memory chips (e.g., the tenth chip) may be enabled for writes and retry reads and other operations. For example, in a computing system, the memory controller may send one bit to the register clock driver (RCD) on the DIMM module to select between 9 and 10 device mode for DRAM commands. The one bit may be in a separate command that sets the 9 or 10 device mode. As another example, the one bit may be a one-bit field that is part of a DRAM command to choose between executing the command on 9 devices or 10 devices. When the one or more further memory chips (e.g., the tenth chip) detect a command in 9 device mode (e.g., a read-related command), it will ignore the command.

As an exemplary implementation, an additional bit may be added to CS encoding at the RCD/IMB (where IMB is an acronym for Integrated Data Buffer) and output an extra set of CS signals for the tenth chip of each rank. This may be an extra pin, or if CS encoding is used, it may be an extra bit that re-uses a chip select encoding pin but is a bit sampled on a different clock edge.

Considering for example a 10x4 DIMM, a read operation in which the tenth memory chip is not accessed still makes it possible to detect one device data error in the remaining 9 memory chips. In this regard, 10x4 DIMM supports single device data correction (SDDC). If there is even one bit error detected, the retry read flow will re-read the DRAM address using all 10 memory chips. For example, the memory controller may use Reed-Solomon erasure decoding and check that the modified syndrome indicates no errors in the typical case (reading only 9 chips and there are no errors). The memory controller may handle the case where there are no read DQS strobes from tenth memory chip.

The following examples pertain to aspects of the configuration proposed herein.

Example 1 is a method of operating a memory module, the memory module including a plurality of memory chips, the method including: carrying out a first read operation, the first read operation including reading data from one or more memory chips among the plurality of memory chips while leaving out from the first read operation one or more further memory chips among the plurality of memory chips. The method further includes carrying out an error detection on the data from the one or more memory chips. The method further includes, if the error detection indicates an error condition of the data from the one or more memory chips, carrying out a second read operation (illustratively, a retry read operation), the second read operation including reading data from the one or more further memory chips. For example, the first read operation may include accessing one or more memory chips among the plurality of memory chips to read data stored in the one or more memory chips; and refraining from accessing one or more further memory chips among the plurality of memory chips. For example, the second read operation may include accessing the one or more further memory chips to read data stored in the one or more further memory chips.

The second read operation may include reading data only from the further memory chips that were left out from the first read operation (e.g., providing a temporary storage of the data retrieved from the memory chips accessed in the first read operation). Alternatively, the second read operation may include reading data from all the memory chips, i.e., the one or more memory chips and the one or more further memory chips. As a further example, the second read operation may include reading data from the further memory chips that were left out from the first read operation and from a subset of the memory chips from which data were read in the first read operation (in other words, one or more but not all of the memory chips from which data were read in the first read operation).

For example, the second read operation may include accessing only the further memory chips that were not accessed in the first read operation (e.g., providing a temporary storage of the data retrieved from the memory chips accessed in the first read operation). Alternatively, the second read operation may include accessing all the memory chips, i.e., the one or more memory chips and the one or more further memory chips, to read data stored in all memory chips. As a further example, the second read operation may include accessing the further memory chips that were not accessed in the first read operation and a subset of the memory chips accessed in the first read operation (in other words, one or more but not all of the memory chips accessed in the first read operation).

Example 2 is a method of operating a memory module, the memory module including a plurality of memory chips, the method including: enabling one or more memory chips among the plurality of memory chips for a read operation to read data stored in the one or more memory chips; disabling one or more further memory chips among the plurality of memory chips for the read operation to leave them out from the read operation (e.g., to refrain from reading data stored in the one or more further memory chips); carrying out an error detection on the data from the one or more memory chips; and maintaining the one or more further memory chips in a disabled state for the read operation (e.g., for read-related commands) unless the error detection indicates an error condition of the data from the one or more memory chips.

In this regard, "disabling a memory chip" may include disabling the internal memory array read for the memory chip. As another example, additionally or alternatively, "disabling a memory chip" may include disabling the input/output (I/O) power for the memory chip. For example, by using chip select, at least part of the command decode power may be disabled. In general, a memory chip may be considered "disabled for a read operation" if the memory chip does not participate to the read operation, e.g., if the memory chip ignores or will ignore read-related commands that prompt or cause reading data stored in that memory chip. A memory chip that is "disabled" for a read operation may still be enabled or active for other types of operations. A memory chip that is "disabled" for a read operation may also be referred to herein as "read disabled". In a corresponding manner, a memory chip may be considered "enabled for a read operation" if the memory chip participates in the read operation, e.g., if the memory chip responds to read-related commands that prompt or cause reading data stored in that memory chip.

In Example 3, the method of example 1 or 2 may optionally further include that the data stored in the one or more further memory chips include redundancy data associated with the data stored in the one or more memory chips.

In Example 4, the method of example 3 may optionally further include, if the error detection indicates an error condition of the data from the one or more memory chips, carrying out a correction operation to correct the data stored in the one or more memory chips using the redundancy data from the one or more further memory chips.

In Example 5, the method of any one of examples 1 to 4 may optionally further include that data stored in at least one of the one or more memory chips include a first portion of redundancy data associated with the data stored in the one or more memory chips, that data stored in the one or more further memory chips include a second portion of the redundancy data associated with the data stored in the one or more memory chips; and that the method further includes, if the error detection indicates an error condition of the data from the one or more memory chips, carrying out a correction operation to correct the data stored in the one or more memory chips using the first portion of the redundancy data from the at least one of the one or more memory chips and the second portion of the redundancy data from the one or more further memory chips.

In Example 6, the method of any one of examples 1 to 5 may optionally further include carrying out a write operation, the write operation including: accessing the one or more memory chips and the one or more further memory chips to write data in the one or more memory chips and in the one or more further memory chips.

In Example 7, the method of example 6 may optionally further include that the data written in the one or more further memory chips include redundancy data associated with the data written in the one or more memory chips. For example, a first portion of the redundancy data may be written in at least one of the one or more memory chips, and a second portion of the redundancy data may be written in the one or more further memory chips.

In Example 8, the method of any one of examples 1 to 7 may optionally further include that the first read operation includes: enabling the one or more memory chips for the first read operation (e.g., via a chip select signal); and disabling the one or more further memory chips for the first read operation (e.g., via a further chip select signal). The second read operation may further include enabling the one or more further memory chips for the second read operation (e.g., via the further chip select signal). For example, the second read operation may also include enabling the one or more memory chips for the second read operation (e.g., via the chip select signal), e.g., all or a subset as discussed above.

In Example 9, the method of any one of examples 1 to 8 may optionally further include, if the error detection does not indicate an error condition of the data from the one or more memory chips, carrying out a third read operation, the third read operation including: reading data from the one or more memory chips among the plurality of memory chips while leaving out from the third read operation the one or more further memory chips among the plurality of memory chips. Illustratively, the method may include maintaining the one or more further memory chips disabled for the further (e.g., third) read operation, if no error is detected. For example, the third read operation may include accessing the one or more memory chips among the plurality of memory chips to read data stored in the one or more memory chips; and refraining from accessing the one or more further memory chips among the plurality of memory chips.

In Example 10, the method of any one of examples 1 to 9 may optionally further include that the error condition includes at least one bit error in the data from the one or more memory chips.

In Example 11, the method of any one of examples 1 to 10 may optionally further include that the one or more further memory chips include a single memory chip among the plurality of memory chips.

In Example 12, the method of any one of examples 1 to 11 may optionally further include that the memory module is configured for volatile storage of data.

In Example 13, the method of any one of examples 1 to 12 may optionally further include that the memory module is configured as a DRAM module, e.g., as a DIMM module with DRAM.

In Example 14, the method of any one of examples 1 to 13 may optionally further include that the plurality of memory chips includes ten memory chips (e.g., with nine of the memory chips enabled for the read operation, and one of the memory chips disabled for the read operation).

Example 15 is a computing system including: a memory module including a plurality of memory chips; and a processor configured to carry out a first read operation. For the first read operation the processor is configured to: read data from one or more memory chips among the plurality of memory chips while leaving out from the first read operation one or more further memory chips among the plurality of memory chips. The processor is further configured to carry out an error detection on the data from the one or more memory chips. The processor is further configured to carry out a second read operation, if the error detection indicates an error condition of the data from the one or more memory chips. For the second read operation the processor is configured to read data from the one or more further memory chips. For example, for the first read operation the processor may be configured to: access one or more memory chips among the plurality of memory chips to read data stored in the one or more memory chips; and refrain from accessing one or more further memory chips among the plurality of memory chips. For example, for the second read operation the processor may be configured to access the one or more further memory chips to read data stored in the one or more further memory chips.

For the second read operation, the processor may read data only from the further memory chips that were not left out from the first read operation. Alternatively, for the second read operation the processor may read data from all the memory chips. As a further example, for the second read operation the processor may read data from the further memory chips that were left out from the first read operation and read data from a subset of the memory chips from which data were read in the first read operation.

For example, for the second read operation, the processor may access only the further memory chips that were not accessed in the first read operation. Alternatively, for the second read operation the processor may access all the memory chips. As a further example, for the second read operation the processor may access the further memory chips that were not accessed in the first read operation and a subset of the memory chips accessed in the first read operation.

Example 16 is a computing system including: a memory module including a plurality of memory chips; and a processor configured to: enable one or more memory chips among the plurality of memory chips for a read operation to read data stored in the one or more memory chips; disable one or more further memory chips among the plurality of memory chips for the read operation to refrain from reading data stored in the one or more further memory chips; carry out an error detection on the data from the one or more memory chips; and maintain the one or more further memory chips in a disabled state for the read operation (illustratively, a "read disabled state") unless the error detection indicates an error condition of the data from the one or more memory chips.

In this regard, to "disable a memory chip" for a read operation the processor may instruct or may cause a disabling of the internal memory array read for the memory chip. As another example, additionally or alternatively, the processor may instruct or may cause a disabling of the input/output (I/O) power for the memory chip. As a further example, a bit field in the command may enable/disable a single read-related command for a memory chip.

In Example 17, the computing system of example 15 or 16 may optionally further include that the one or more further memory chips are configured to store redundancy data associated with the data stored in the one or more memory chips.

In Example 18, the computing system of example 17 may optionally further include that the processor is further configured to carry out correction operation to correct the data stored in the one or more memory chips using the redundancy data from the one or more further memory chips, if the error detection indicates an error condition of the data from the one or more memory chips.

In Example 19, the computing system of any one of examples 15 to 18 may optionally further include that at least one of the one or more memory chips is configured to store a first portion of redundancy data associated with the data stored in the one or more memory chips, that the one or more further memory chips are configured to store a second portion of the redundancy data associated with the data stored in the one or more memory chips, and that the processor is further configured to carry out a correction operation to correct the data stored in the one or more memory chips using the first portion of the redundancy data from the at least one of the one or more memory chips and the second portion of the redundancy data from the one or more further memory chips, if the error detection indicates an error condition of the data from the one or more memory chips.

In Example 20, the computing system of any one of examples 15 to 19 may optionally further include that the processor is further configured to carry out a write operation. For the write operation the processor may be configured to access the one or more memory chips and the one or more further memory chips to write data in the one or more memory chips and in the one or more further memory chips.

In Example 21, the computing system of example 20 may optionally further include that the data written in the one or more further memory chips include redundancy data associated with the data written in the one or more memory chips. For example, the processor may cause a writing of a first portion of the redundancy data in at least one of the one or more memory chips, and of a second portion of the redundancy data in the one or more further memory chips.

In Example 22, the computing system of any one of examples 15 to 21 may optionally further include that for the first read operation the processor is configured to: enable the one or more memory chips for the first read operation (e.g., via a chip select signal); and disable the one or more further memory chips for the first read operation (e.g., via a further chip select signal). For the second read operation the processor may be further configured to enable the one or more further memory chips for the second read operation (e.g., via the further chip select signal). For example, for the second read operation the processor may further enable the one or more memory chips for the second read operation, e.g., all or a subset as discussed above.

In Example 23, the computing system of any one of examples 15 to 22 may optionally further include that the processor is further configured to carry out a third read operation, if the error detection does not indicate an error condition of the data from the one or more memory chips. For the third read operation the processor may be configured to: access the one or more memory chips among the plurality of memory chips to read data stored in the one or more memory chips; and refrain from accessing the one or more further memory chips among the plurality of memory chips. Illustratively, the processor may maintain the one or more further memory chips disabled for the further (e.g., third) read operation, if no error is detected.

In Example 24, the computing system of any one of examples 15 to 23 may optionally further include that the error condition includes at least one bit error in the data from the one or more memory chips.

In Example 25, the computing system of any one of examples 15 to 24 may optionally further include that the one or more further memory chips include a single memory chip among the plurality of memory chips.

In Example 26, the computing system of any one of examples 15 to 25 may optionally further include that the memory module is configured for volatile storage of data.

In Example 27, the computing system of any one of examples 15 to 26 may optionally further include that the memory module is configured as a DRAM module, e.g., as a DIMM module with DRAM.

In Example 28, the computing system of any one of examples 15 to 27 may optionally further include that the plurality of memory chips includes ten memory chips (e.g., with nine of the memory chips enabled for the first read operation, and one of the memory chips disabled for the first read operation).

Example 29 is a memory module including: a plurality of memory chips; a first chip select pin connected to one or more memory chips of the plurality of memory chips; and a second chip select pin connected to one or more further memory chips of the plurality of memory chips. The one or more further memory chips may be configured to store a (second) portion of the redundancy data associated with the data stored in the one or more memory chips.

In Example 30, the memory module of example 29 may optionally further include that at least one memory chip of the one or more memory chips is configured to store another (first) portion of redundancy data associated with the data stored in the one or more memory chips.

In Example 31, the memory module of example 29 or 30 may optionally further include a buffer circuit (e.g., a register clock driver) connected to the first chip select pin and to the second chip select pin. The buffer circuit may be configured to: receive a first chip select signal at the first chip select pin to enable a read operation at one or more memory chips (e.g., enable access to the one or more memory chips) for reading data stored in the one or more memory chips; and receive a second chip select signal at the second chip select pin, to disable a read operation at the one or more further memory chips (e.g., to disable access to the one or more further memory chips).

In Example 32, the memory module of any one of examples 29 to 31 may optionally further include that the one or more further memory chips include a single memory chip among the plurality of memory chips.

In Example 33, the memory module any one of examples 29 to 32 may optionally further include that the memory module is configured for volatile storage of data.

In Example 34, the memory module of any one of examples 29 to 33 may optionally further include that the memory module is configured as a DRAM module, e.g., as a DIMM module with DRAM.

In Example 35, the memory module of any one of examples 29 to 34 may optionally further include that the plurality of memory chips includes ten memory chips (e.g., with nine of the memory chips enabled for the read operation, and one of the memory chips disabled for the read operation).

Example 36 is a memory module including: a plurality of memory chips; and a buffer circuit configured to receive a readout signal containing instructions for a read operation of the plurality of memory chips, and execute the instructions contained in the readout signal to: enable one or more memory chips of the plurality of memory chips for reading data stored in the one or more memory chips; and disable one or more further memory chips of the plurality of memory chips for the read operation. The one or more further memory chips may be configured to store a (second) portion of the redundancy data associated with the data stored in the one or more memory chips.

In Example 37, the memory module of example 36 may optionally further include that at least one memory chip of the one or more memory chips is configured to store another (first) portion of redundancy data associated with the data stored in the one or more memory chips.

In Example 38, the memory module of example 36 or 37 may optionally further include that the readout signal is a chip select signal.

In Example 39, the memory module of any one of examples 36 to 38 may optionally further include that the one or more further memory chips include a single memory chip among the plurality of memory chips.

In Example 40, the memory module any one of examples 36 to 39 may optionally further include that the memory module is configured for volatile storage of data.

In Example 41, the memory module of any one of examples 36 to 40 may optionally further include that the memory module is configured as a DRAM module, e.g., as a DIMM module with DRAM.

In Example 42, the memory module of any one of examples 36 to 41 may optionally further include that the plurality of memory chips includes ten memory chips (e.g., with nine of the memory chips enabled for the read operation, and one of the memory chips disabled for the read operation).

Example 43 is a computer program (product) including instructions which, when the program is executed by a computer, cause the computer to carry out the method operating a memory module of any one of examples 1 to 14.

Example 44 is a non-transitory computer-readable (storage) medium including instructions which, when executed by a computer, cause the computer to carry out the method operating a memory module of any one of examples 1 to 14.

In the present document particular reference is made to the adapted read operation being carried out on a plurality of memory chips. However, the adapted read operation may be applicable to any type of memory units. In particular, the adapted read operation may be applicable to memory dies of a memory module. Accordingly, the aspects described herein in relation to memory chips, and to operations carried out on memory chips, apply in a corresponding manner to memory dies (or other types of memory units), and to operations carried out on memory dies. For example, considering a memory module having multiple ranks of memory dies, the adapted read operation may include reading data from one rank, while leaving the memory dies of another rank out from the read operation (and reading data from this other rank at a later stage if needed).

Example 45 is a method of operating a memory module, the memory module including a plurality of memory dies, the method including: carrying out a first read operation, the first read operation including reading data from one or more memory dies among the plurality of memory dies while leaving out from the first read operation one or more further memory dies among the plurality of memory dies. The method further includes carrying out an error detection on the data from the one or more memory dies. The method further includes, if the error detection indicates an error condition of the data from the one or more memory dies, carrying out a second read operation (illustratively, a retry read operation), the second read operation including reading data from the one or more further memory dies. For example, the first read operation may include accessing one or more memory dies among the plurality of memory dies to read data stored in the one or more memory dies; and refraining from accessing one or more further memory dies among the plurality of memory dies. For example, the second read operation may include accessing the one or more further memory dies to read data stored in the one or more further memory dies.

For example, if the error detection does not indicate an error condition of the data from the one or more memory dies, the method may include preventing the second read operation (illustratively, refraining from carrying out the second read operation to read data from the one or more further memory dies).

Example 46 is a method of operating a memory module, the memory module including a plurality of memory dies, the method including: enabling one or more memory dies among the plurality of memory dies for a read operation to read data stored in the one or more memory dies; disabling one or more further memory dies among the plurality of memory dies for the read operation to leave them out from the read operation (e.g., to refrain from reading data stored in the one or more further memory dies); carrying out an error detection on the data from the one or more memory dies; and maintaining the one or more further memory dies in a disabled state for the read operation (e.g., for read-related commands) unless the error detection indicates an error condition of the data from the one or more memory dies.

In Example 47, the method of example 45 or 46 may optionally further include that the data stored in the one or more further memory dies include redundancy data associated with the data stored in the one or more memory dies.

In Example 48, the method of example 47 may optionally further include, if the error detection indicates an error condition of the data from the one or more memory dies, carrying out a correction operation to correct the data stored in the one or more memory dies using the redundancy data from the one or more further memory dies.

In Example 49, the method of any one of examples 45 to 49 may optionally further include that data stored in at least one of the one or more memory dies include a first portion of redundancy data associated with the data stored in the one or more memory dies, that data stored in the one or more further memory dies include a second portion of the redundancy data associated with the data stored in the one or more memory dies; and that the method further includes, if the error detection indicates an error condition of the data from the one or more memory dies, carrying out a correction operation to correct the data stored in the one or more memory dies using the first portion of the redundancy data from the at least one of the one or more memory dies and the second portion of the redundancy data from the one or more further memory dies.

In Example 50, the method of any one of examples 45 to 49 may optionally further include carrying out a write operation, the write operation including: accessing the one or more memory dies and the one or more further memory dies to write data in the one or more memory dies and in the one or more further memory dies.

In Example 51, the method of example 50 may optionally further include that the data written in the one or more further memory dies include redundancy data associated with the data written in the one or more memory dies. For example, a first portion of the redundancy data may be written in at least one of the one or more memory dies, and a second portion of the redundancy data may be written in the one or more further memory dies.

In Example 52, the method of any one of examples 45 to 51 may optionally further include that the first read operation includes: enabling the one or more memory dies for the first read operation (e.g., via a chip select signal); and disabling the one or more further memory dies for the first read operation (e.g., via a further chip select signal). The second read operation may further include enabling the one or more further memory dies for the second read operation (e.g., via the further chip select signal). For example, the second read operation may also include enabling the one or more memory dies for the second read operation (e.g., via the chip select signal), e.g., all or a subset as discussed above.

In Example 53, the method of any one of examples 45 to 52 may optionally further include, if the error detection does not indicate an error condition of the data from the one or more memory dies, carrying out a third read operation, the third read operation including: reading data from the one or more memory dies among the plurality of memory dies while leaving out from the third read operation the one or more further memory dies among the plurality of memory dies.

In Example 54, the method of any one of examples 45 to 53 may optionally further include that the error condition includes at least one bit error in the data from the one or more memory dies.

In Example 55, the method of any one of examples 45 to 54 may optionally further include that the one or more further memory dies include a single memory die among the plurality of memory dies.

In Example 56, the method of any one of examples 45 to 55 may optionally further include that the memory module is configured for volatile storage of data.

In Example 57, the method of any one of examples 45 to 56 may optionally further include that the memory module is configured as a DRAM module, e.g., as a DIMM module with DRAM.

In Example 58, the method of any one of examples 45 to 57 may optionally further include that the plurality of memory dies includes ten memory dies (e.g., with nine of the memory dies enabled for the read operation, and one of the memory dies disabled for the read operation).

Example 59 is a computing system including: a memory module including a plurality of memory dies; and a processor configured to carry out a first read operation. For the first read operation the processor is configured to: read data from one or more memory dies among the plurality of memory dies while leaving out from the first read operation one or more further memory dies among the plurality of memory dies. The processor is further configured to carry out an error detection on the data from the one or more memory dies. The processor is further configured to carry out a second read operation, if the error detection indicates an error condition of the data from the one or more memory dies. For the second read operation the processor is configured to read data from the one or more further memory dies.

Example 60 is a computing system including: a memory module including a plurality of memory dies; and a processor configured to: enable one or more memory dies among the plurality of memory dies for a read operation to read data stored in the one or more memory dies; disable one or more further memory dies among the plurality of memory dies for the read operation to refrain from reading data stored in the one or more further memory dies; carry out an error detection on the data from the one or more memory dies; and maintain the one or more further memory dies in a disabled state for the read operation (illustratively, a "read disabled state") unless the error detection indicates an error condition of the data from the one or more memory dies.

Example 61 is a computer program (product) including instructions which, when the program is executed by a computer, cause the computer to carry out the method operating a memory module of any one of examples 45 to 58.

Example 62 is a non-transitory computer-readable (storage) medium including instructions which, when executed by a computer, cause the computer to carry out the method operating a memory module of any one of examples 45 to 58.

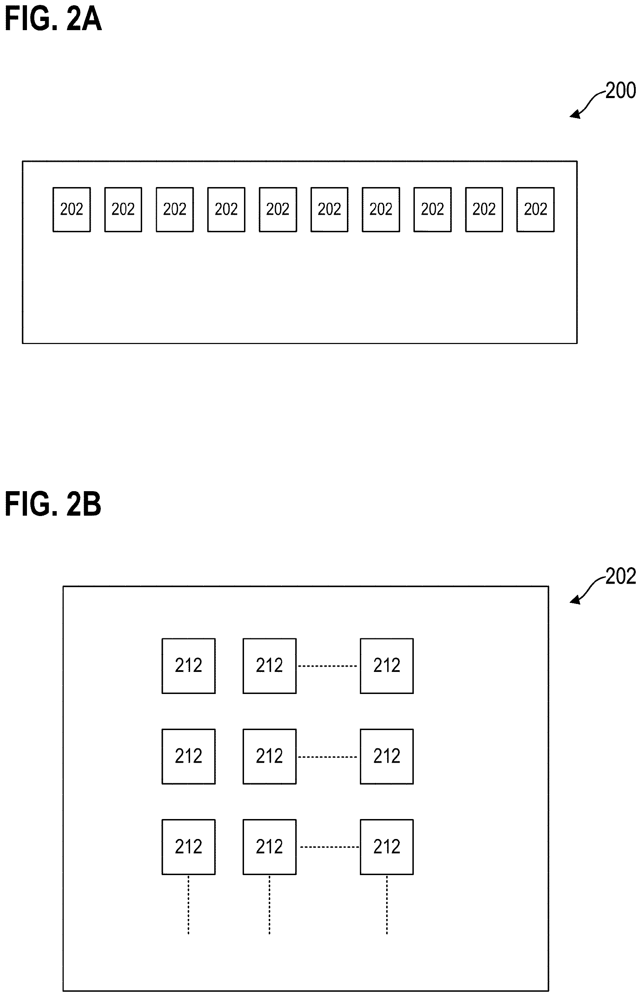

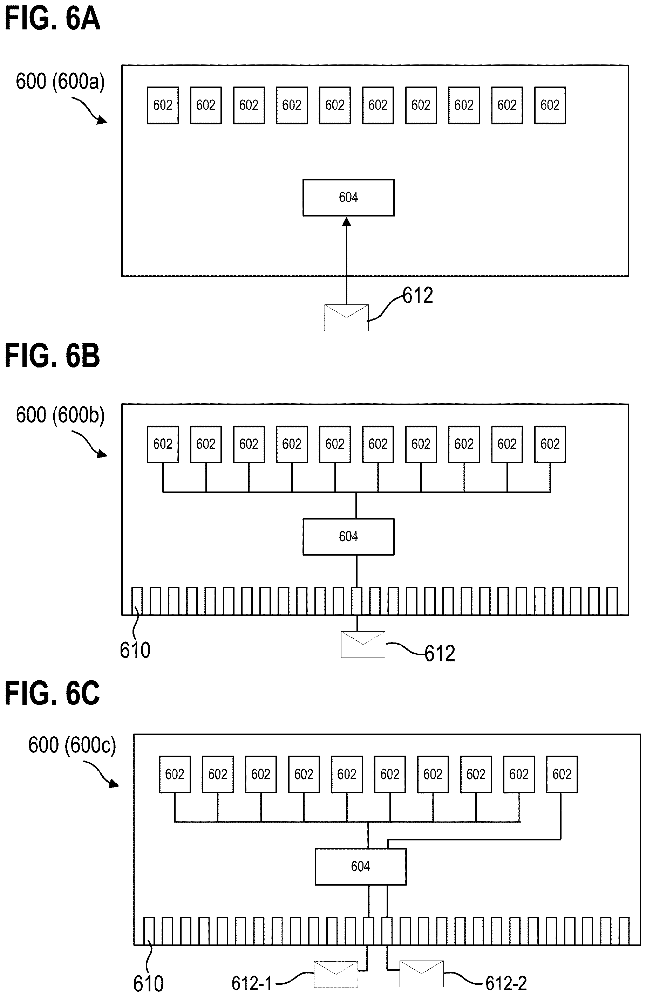

Before discussing the proposed configuration in more detail, the general aspects of a memory module suitable for the proposed approach are discussed in relation to **FIG. 2A** and **FIG. 2B****.** The memory module 200 shown in FIG. 2A has a simplified and schematic configuration to illustrate some general concepts. A further, more detailed configuration of a memory module will be discussed in relation to FIG. 6A to FIG. 6C. It is understood that, in general, the shown configuration is simplified for the purpose of illustration, and that the memory module 200 may include additional components with respect to those shown. For example, a memory module 200 may further include cooling elements (e.g., heat sinks) for controlling the thermal behavior of the module.

The memory module 200 may include a plurality of memory chips 202. In this regard, the memory module 200 may include any suitable number of memory chips 202, e.g., two, three, four, five, ten, or more than ten. In some aspects, the memory module 200 may include a one or more ranks (e.g., a plurality of ranks), and each rank may include a respective plurality of memory chips 202. In a preferred configuration, the memory module 200 may include ten memory chips 202, e.g., each rank of the memory module 200 may include ten memory chips 202. The number of memory dies in a rank may be dependent on the configuration of the memory chips, as discussed in further detail below. In case the memory module 200 includes multiple ranks, the module 200 may further include multiple sub-channels that allow independent reads and writes of the memory chips in a rank.

The adapted read operation proposed herein will be discussed in relation to a "plurality of memory chips". In this regard, the "plurality of memory chips" may be understood as the memory chips 202 of the memory module 200, or as the memory chips 202 of one rank of the memory module 200 in the case that the memory module 200 includes a plurality of ranks.

In this regard, the term "memory module" is used herein to describe an electronic component that includes a circuit substrate (e.g., a printed circuit board), on which a plurality of memory chips are disposed. A "memory module" (e.g., the memory module 200) may be configured for installation into an electronic device, illustratively a host device. For example, a "memory module" may further include a plurality of pins for coupling with a motherboard of the electronic device (see also FIG. 6A to FIG. 6C).

In general, a "memory module" may be a separate, individual component that may be coupled with a further circuit substrate that includes the processor for which the memory module provides its memory function (e.g., the motherboard of an electronic device). However, in the context of the proposed configuration, a "memory module" may be more generally understood as a group of memory chips, illustratively as a plurality of memory chips that are logically related to one another. For example, a "memory module" may be more generally understood as a plurality of memory chips, in which one or more memory chips store application data, and one or more other memory chips store redundancy data associated with the application data.

Accordingly, the memory chips that belong to a "memory module" may be disposed on a dedicated, separate circuit substrate with respect to the circuit substrate that includes the processor for which the memory module provides its memory function (e.g., a separate circuit substrate with respect to the motherboard). Alternatively, the memory chips that belong to a "memory module" may be disposed directly on the same circuit substrate that includes the processor for which the memory module provides its memory function (e.g., directly on the motherboard).

The term "memory chip" is used herein to describe an integrated circuit including one or more memory dies. Accordingly, the term "memory die" is used herein to describe the semiconductor wafer portion (e.g., the silicon wafer portion) in/on which the memory cells and other circuit components are fabricated. A "memory chip" may include one or more "memory dies", and the memory dies of a memory chip may be enclosed in a housing, with pins (also referred to as contacts) for coupling with other components, e.g., for mounting on the circuit substrate of a "memory module". A "memory chip" may have a certain capacity and a certain width (i.e., a certain number of data bits that the memory chip is capable of transferring in parallel during a memory access cycle). A "memory chip" may thus be understood as the component of the memory module in which the data are stored (illustratively, the data are stored in the memory cells contained in the memory chip, e.g., formed in the memory die or dies of the memory chip).

In general, a "package" may include one or more memory chips (e.g., a plurality of memory chips), and the one or more memory chips in the package may, in turn, each include one or more memory dies. The aspects described herein in relation to a memory chip may apply in a corresponding manner to the memory die or memory dies of the memory chip. For example, reading data from a memory chip may include reading data from one or more memory dies of the memory chip. In a corresponding manner, writing data into a memory chip may include writing data into one or more memory dies of the memory chip.

The approach proposed herein may involve memory chips disposed in different packages and/or memory chips disposed in the same package. Illustratively, in the adapted read operation the memory chips from which data are read out, and the further memory chip(s) from which data are not read out may be in the same package or in different packages. For example, a first package may include one or more memory chips from which data are read out, and a second package may include one or more further memory chips from which data are not read out. As another example, a first package may include one or more memory chips from which data are read out, and a second package may include one or more memory chips from which data are read out and one or more further memory chips from which data are not read out, etc.

In this regard, FIG. 2B shows an exemplary configuration of a memory chip 202 including a plurality of memory cells 212. Illustratively, FIG. 2B may show a memory die of a memory chip 202, with the memory cells 212 formed in/on a semiconductor substrate. A memory cell 212 may have any suitable configuration for storing data. In general, a memory cell 212 may include a memory element operable (in other words, programmable) to assume one of at least two possible states, with a first state corresponding to a first logic value (e.g., a logic 0), and a second state corresponding to a second logic value (e.g., a logic 1). A memory cell 212 may thus be operable to store information in a bitwise manner.

Considering for example the scenario in which the memory module 200 is configured as a DRAM module, a memory cell 212 may include a capacitor as "memory element", and the bitwise storage of information may be defined by the charge of the capacitor. For example, a charged capacitor may correspond to a logic 1, and a discharged capacitor may correspond to a logic 0. It is however understood that other configurations for storing information may be provided, depending on the type of memory cell 212 and, in general, on the type of memory module 200. As another example, a memory cell 212 may include a transistor as "memory element", with a first threshold voltage of the transistor corresponding to a logic 1, and a second threshold voltage of the transistor corresponding to a logic 0.

The memory cells 212 may be disposed in any suitable manner. For example, the memory cells 212 may be disposed in a one-dimensional array or two-dimensional array (illustratively, a matrix). In general, each memory cell 212 may be connected to control lines (e.g., to a word-line, a bit-line, and, depending on the configuration, a source-line). The control lines may be used to deliver voltages to the memory cells 212, for carrying out a read operation and/or a write operation. In this regard, a memory chip 202 may include any suitable number and arrangement of control lines, depending on the desired architecture. For example, a memory cell 212 may include a switch element (e.g., a transistor) configured to selectively connect or disconnect the memory element of the memory cell 212 to the control lines, thus enabling or disabling the delivery of voltages to that memory element. Considering a matrix arrangement, the rows and columns of the matrix may define the addressing of the individual memory cells 212.

A "write operation" to write data in a memory chip 200 (e.g., in a memory die of the memory chip) may thus include providing write voltages to one or more of the memory cells 212 (illustratively, to the memory cells 212 to be written) via the control lines, to operate the respective memory element to assume a state corresponding to the information to be stored. In a corresponding manner, a "read operation" to read data from a memory chip 200 (e.g., from a memory die of the memory chip) may include providing read voltages to one or more of the memory cells 212 (illustratively, to the memory cells 212 to be read) via the control lines. The state of the memory element of a memory cell 212 may influence a voltage at the memory cell 212, so that a sensing of the voltage allows to determine the state of the memory element and, accordingly, the information stored in the memory cell 212. A "read operation" may also be referred to herein as "readout operation".

As discussed above, the memory module 200 may generally have any suitable configuration. In an embodiment, the memory module 200 may be configured for volatile storage of data (in other words, for temporary storage of data), illustratively the memory module 200 may be a volatile memory. The reduced power consumption offered by the adapted read operation described herein may be of particular relevance for volatile memories, in view of the more frequent memory operations involving this type of memories. It is however understood that in principle the memory module 200 may alternatively be configured for non-volatile storage of data (in other words, for permanent storage of data).

Furthermore, in an embodiment, the memory module 200 may be configured as a DRAM module, e.g., the memory module 200 may include a plurality of DRAM chips, each having a plurality of DRAM cells (e.g., formed by a transistor for coupling with the control lines, and a capacitor as memory element). In particular, the memory module 200 may be configured as a double data rate (DDR) DRAM module or DDR synchronous DRAM (DDR SDRAM) module. According to DDR technology, each clock cycle may be used on both the rising edge and the falling edge, thus doubling the data transfer rate. Various generations of DDR exist, e.g., DDR, DDR2, DDR3, DDR4, DDR5, and DDR6, and the memory module 200 may be configured according to any DDR generation (in particular, according to DDR6).

It is however understood that in principle the memory module 200 may alternatively be configured according to another type of memory technology, such as RAM, SRAM, read-only memory (ROM), flash memory, solid-state memory, and/or the like.

As a further consideration, in an embodiment, the memory module 200 may be configured as a DIMM, i.e., as a dual in-line memory module, e.g., as a DIMM with DRAM memory chips 202. A DIMM includes a plurality of memory chips (e.g., DRAM chips) on both sides of the circuit substrate (e.g., on both sides of a printed circuit board), thus providing a compact, yet efficient arrangement for storing large amounts of data. The reduced power consumption offered by the adapted read operation described herein may be of particular relevance for DIMMs, in view of the large data volumes and the relatively high data transfer speeds usually provided by this type of memory module, which may lead to an increase in the operating temperature for frequent memory accesses. Furthermore, DIMM provides a flexible design that support the various generations of DDR DRAM. It is however understood that in principle the memory module 200 may alternatively be configured as another type of module, such as a single in-line memory module (SIMM), a SO-DIMM (small outline DIMM), and the like. As mentioned above, the number of memory dies in a memory chip and, accordingly, the number of memory dies in a memory module may depend on the configuration of the chips. For example, a 2-rank DIMM may include dual-die packages, so the same number of memory chips, but double the number of dies compared to a 1-rank DIMM.

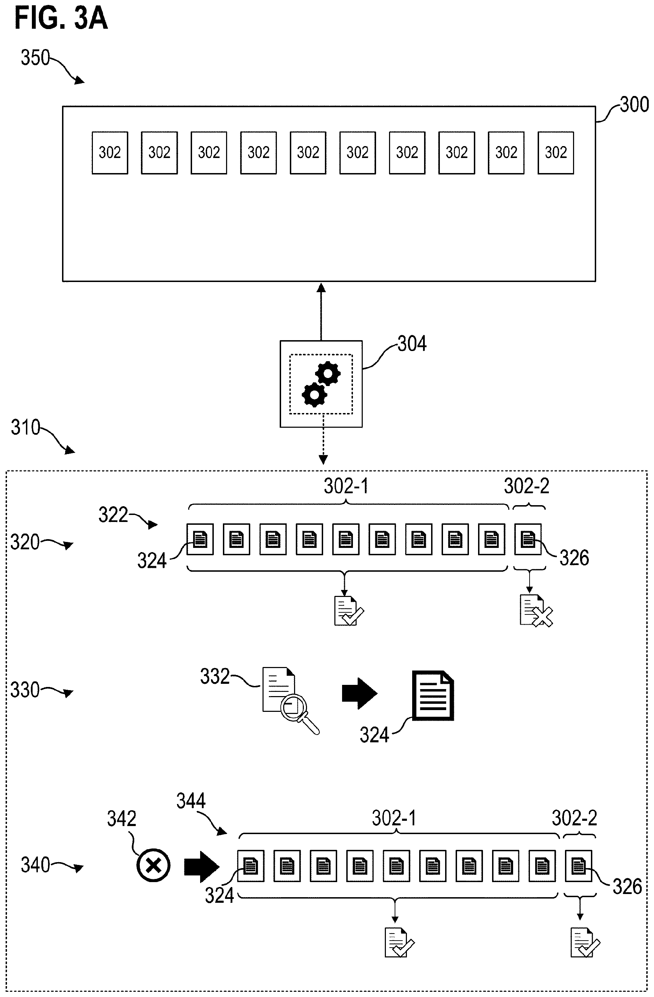

Turning in more detail to the approach proposed herein, FIG. 3A shows a computing system 350 including a memory module 300 and a processor 304. The memory module 300 may generally be configured as the memory module 200, and may include a plurality of memory chips 302 (each including one or more memory dies). The processor 304 may be coupled with the memory module 300 (e.g., communicatively coupled). The processor 304 may access the data stored in the memory module 300 for running one or more applications. For example, the processor 304 may be a memory controller, or may include a memory controller configured to control the operation of the memory module 300. In general, the processor 304 may be configured to instruct or control read operations to read data from the memory module 300 and write operation to write data into the memory module 300.

The processor 304 may be configured to carry out an adapted method 310 of operating a memory module 300, discussed in further detail below. It is understood that aspects discussed in relation to a configuration of the processor 304 may apply to the method 310 (e.g., as a method step), and vice versa. In this regard, the method 310 may be implemented via any suitable combination of hardware and software. In a preferred configuration, the method 310 may be realized in hardware, e.g., the method 310 may be implemented in the memory controller hardware (e.g., of a central processing unit, CPU). In other aspects, the processor 304 may be coupled with a further memory that stores (further) instructions for the operation of the processor (e.g., the memory module 300 may be a volatile memory and the further memory may be a permanent storage, for example), and the instructions may cause the processor 304 to carry out the method 310. As another example, the instructions stored in the further memory may enable or disable the functionality of the method 310 that is realized via hardware.

According to the adapted read operation proposed herein, the processor 304 may carry out a (first) read operation 322 (e.g., as step 320 of the method 310), in which data are read from some but not all the memory chips 302. According to the first read operation 322, the processor 304 may read the data stored in one or more (first) memory chips 302-1 while leaving out from the first read operation 322 the data stored in one or more further (second) memory chips 302-2. Illustratively, according to the first read operation 322, the processor 304 may access one or more (first) memory chips 302-1, and may refrain from accessing one or more further (second) memory chips 302-2. The processor 304 may thus access the data stored in the one or more (first) memory chips 302-1, without accessing the data stored in the one or more further (second) memory chips 302-2. The processor 304 may thus read the data 324 stored in the first memory chips 302-1, and may refrain from reading the data 326 stored in the second memory chips 302-2.

It is understood that although the data stored in the different groups of memory chips 302-1, 302-2 are collectively referred to as data 324 of the first memory chips 302-1 and data 326 of the second memory chips 302-2, this does not imply that each memory chip 302-1, 302-2 of a certain group stores the same data or the same type of data. Each memory chip 302-1, 302-2 may generally store respective data, which may be of any suitable type.

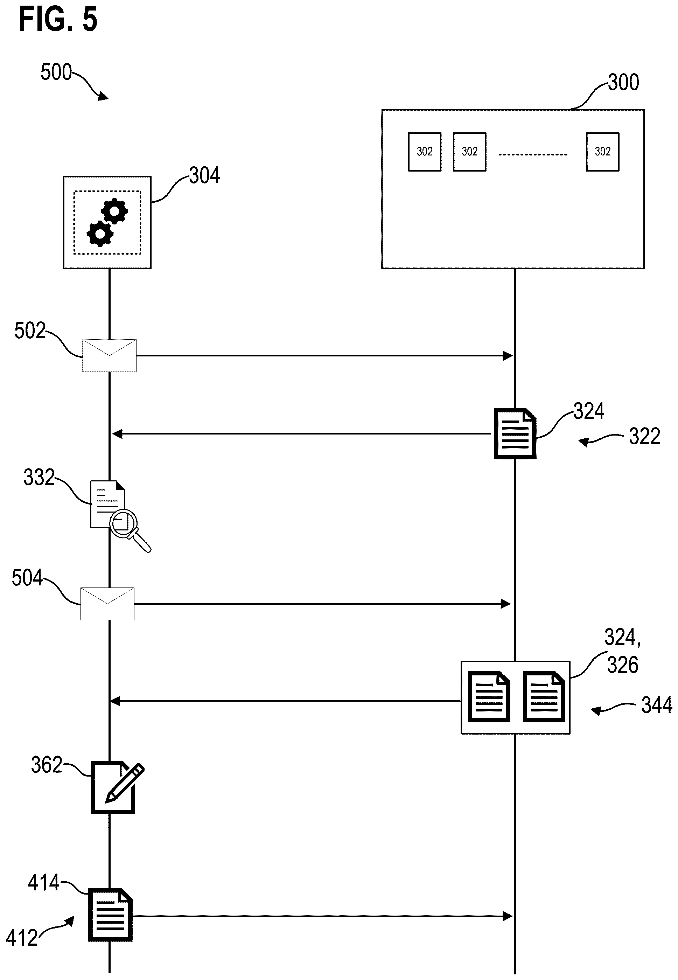

Illustratively, the processor 304 may instruct or control the memory module 300 via a corresponding readout signal (see also FIG. 5) to enable the first memory chips 302-1 and disable the second memory chips 302-2 for the first read operation 322. This way, the second memory chips 302-2 are in a disabled state for the first read operation 322 (illustratively, the second memory chips 302-2 may ignore read-related commands). Thus, the enabled first memory chips 302-1 may participate in the read operation, and the disabled second memory chips 302-2 may ignore the first read operation 322. Illustratively, the enabled first memory chips 302-1 may be electrically active for the first read operation 322, and the disabled second memory chips 302-2 may be electrically inactive for the first read operation 322.

For example, the processor 304 may instruct or control the memory module 300 via a corresponding readout signal to disable the internal memory array read and/or the input/output (I/O) power for the second memory chips 302-2. In a corresponding manner, the processor 304 may instruct or control the memory module 300 to enable the internal memory array read and/or the input/output (I/O) power for the first memory chips 302-1.

In various embodiments, as will also be discussed in relation to FIG. 5, the processor 304 may transmit a chip select signal to the memory module 300 to enable the first memory chips 302-1 and disable the second memory chips 302-2 for the first read operation 322. For example, the processor 304 may transmit a first chip select signal to the first memory chips 302-1 to cause the first memory chips 302-1 to be electrically active for the first read operation 322, and a second chip select signal to the second memory chips 302-2 to cause the second memory chips 302-2 to be electrically inactive for the first read operation 322.

In this regard, the number of first memory chips 302-1 participating in the read operation 322 and the number of second memory chips 302-2 ignoring the read operation 322 may be adapted depending on a desired tradeoff between performance parameters such as power consumption, data transfer rate, reliability of an error detection, and the like. In a preferred configuration, the one or more further (second) memory chips 302-2 may include a single memory chip 302. Correspondingly, the one or more (first) memory chips 302-1 may include all but one memory chips 302. Considering a preferred scenario in which the memory module 300 includes ten memory chips 302 (e.g., in a rank), the read operation 322 may include accessing nine out of ten memory chips 302 to read data therefrom, without accessing the tenth memory chip 302 (illustratively, while disabling the tenth memory chip 302).

The one or more (first) memory chips 302-1 may thus include a subset of memory chips 302, including one or more than one memory chip 302 but less than the total number of memory chips 302 belonging to the memory module 300. In general, the first memory chips 302-1 may be more than one, illustratively a sub-plurality of the memory chips 302.

In some embodiments, the memory chips 302-2 that are disabled during the read operation may be dynamically selected. For example, during a first instance of method 310, one of the memory chips 302 may be disabled, with the remaining (first) memory chips 302-1 being enabled, and during a second subsequent instance of the method 310, another one of the memory chips may be disabled, with the remaining memory chips 302-1 being enabled, etc. This configuration may facilitate balancing the thermal behavior of the memory chips 302.

Turning back to the adapted read operation proposed herein, the processor 304 may carry out an error detection 332 on the data 324 from the first memory chips 302-1 (e.g., as step 330 of the method 310). Illustratively, the processor 304 may determine whether the data 324 include one or more error bits. In this regard, the processor 304 may apply any suitable error detection method or algorithm, such as parity checking, error-correcting code (ECC), Hamming code, Hsiao code, Reed-Solomon code, checksums and cyclic redundancy check (CRC), and/or combinations thereof. In some embodiments, the error detection 332 may include a decoding and re-encoding of the data 324 from the first memory chips 302-1.

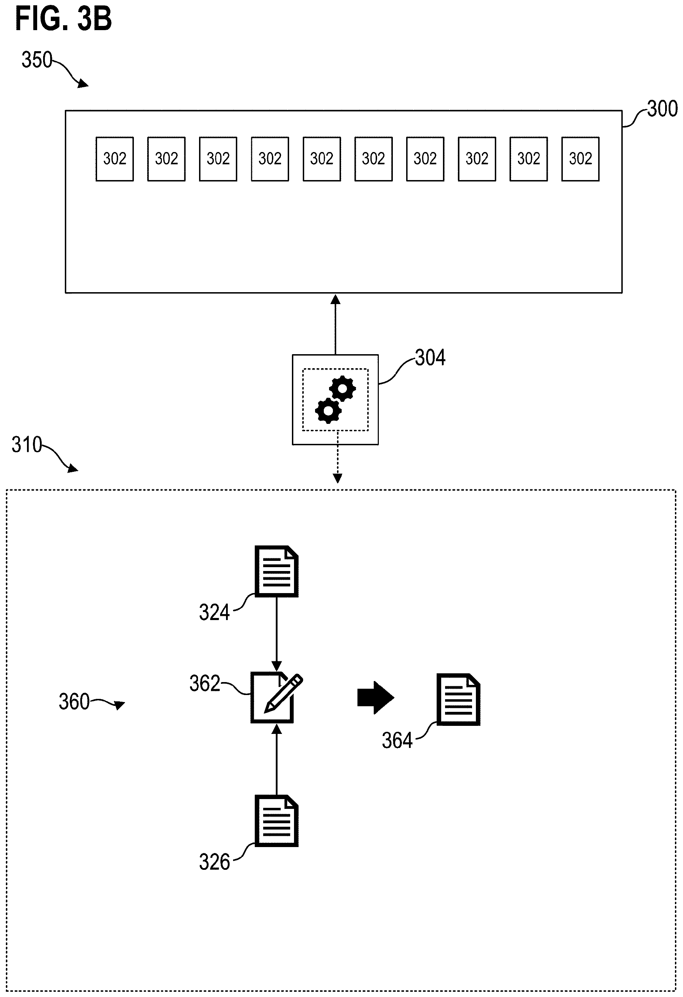

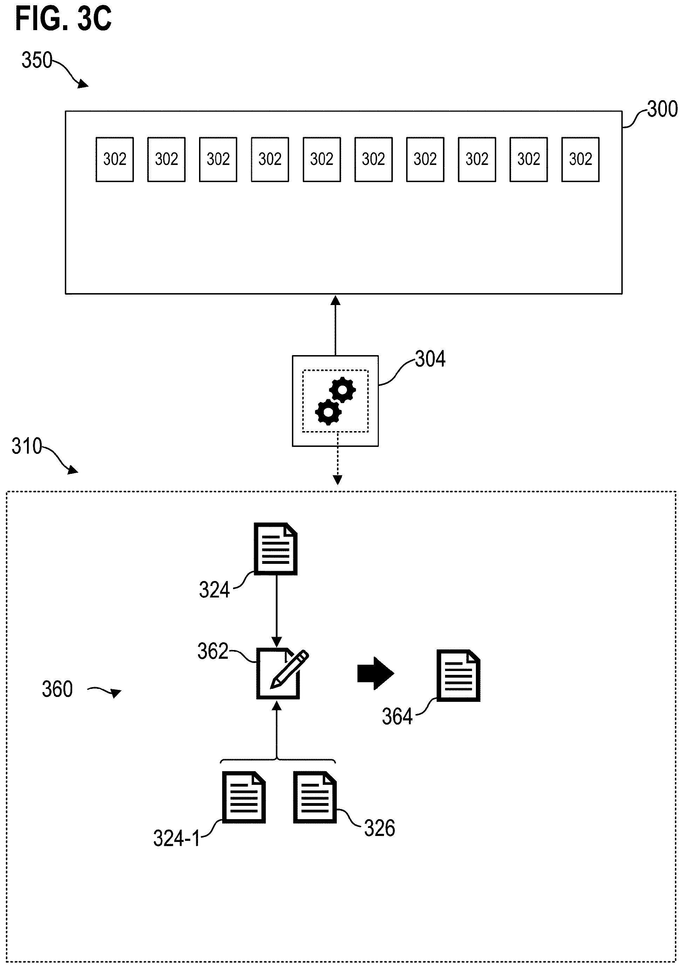

The error detection 332 allows the processor 304 to determine whether the data 324 from the first memory chips 302-1 fulfill an error criterion, e.g., whether the data 324 from the first memory chips 302-1 are in an error condition 342 (e.g., in other words, whether the data 324 include an error). In this regard, the "error condition" considered in the read operation proposed herein may be indicative of an error that is correctable, e.g., via an error correction operation (see FIG. 3B and FIG. 3C). For example, the "error condition" that triggers the further read operation, discussed below, may be indicative of an error that is correctable using the data 326 stored in the second memory chips 302-2. As an example, an "error condition" may be indicative of an error that is correctable using ECC (or any other suitable error correction method or algorithm).

In this regard, it is noted that the term "correctable" indicates that the error is of a type that allows for an automatic detection and correction of the error (e.g., via ECC), independently of whether the system treats such an error as correctable or uncorrectable. Stated differently, a system policy may define an error as "uncorrectable", even in case the error would in principle be "correctable". Also this type of error is understood to fall under the definition of "correctable" for the purposes of the configuration proposed herein.

If the error detection 332 indicates an error condition 342 of the data 324 from the first memory chips 302-1, the processor 304 may carry out a further (second) read operation 344 (e.g., as step 340 of the method 310) in which data 326 are read from the second memory chips 302-2. The second read operation 344 may access at least the second memory chips 302-2 that were disabled/inactive in the first read operation 322 (illustratively, may access the data stored in the second memory chips 302-2). For example, in the second read operation 344 data 324, 326 may be read from all the memory chips 302. As another example, in the second read operation 344 only the data 326 may be read (e.g., while temporarily storing the data 324 from the first memory chips 302-1). As a further example, in the second read operation 344 the data 326 may be read together with data 324 from some of the first memory chips 302-1 (e.g., from one of the first memory chips that stores redundancy data, as discussed below).

Illustratively, if the processor 304 determines that the data 324 from the first memory chips 302-1 contain an error (e.g., at least one error bit), the processor 304 may control or instruct a further read operation 344, to which the second memory chips 302-2 participate, thus reading the data 326 stored in the second memory chips 302-2 (and, optionally, re-reading the data 324 stored in the first memory chips 302-1).

Illustratively, for the second read operation 344, the processor 304 may instruct or control the memory module 300 via a corresponding readout signal (see also FIG. 5) to enable the second memory chips 302-2 and, optionally, the first memory chips 302-1 (or some of the first memory chips 302-1). For example, the processor 304 may transmit a chip select signal to the memory module 300 to enable both the first memory chips 302-1 and the second memory chips 302-2. For example, the processor 304 may transmit the first chip select signal to the first memory chips 302-1 to cause the first memory chips 302-1 (or some of the first memory chips 302-1) to be electrically active for the second read operation 344, and the second chip select signal to the second memory chips 302-2 to cause the second memory chips 302-2 to be electrically active for the second read operation 344.

The second read operation 344 may thus be a "retry read operation" that is carried out in case of errors. With the proposed approach, the additional data 326 stored in the second memory chips 302-2 are thus retrieved if needed, e.g., for correcting the data 324 of the first memory chips 302-1 as discussed in relation to FIG. 3B and FIG. 3C, thus providing a resource-efficient operation of the memory module 300. The proposed approach may thus be understood as a dynamic switching between reading data from a subset of memory chips 302 or reading data from all memory chips 302, depending on whether errors are present/detected in the data.

On the other hand, if the error detection 332 does not indicate an error condition 342 of the data 324, the processor 304 may maintain the second memory chips 302-2 in the disabled state (illustratively, a "read disabled state"), e.g., for further read operations (e.g., further instances of the method 310). Illustratively, according to the proposed approach, the one or more (second) memory chips 302-2 of the memory module 300 may remain disabled for read data therefrom and not participate to read operations unless an error condition 342 is detected for the data 324 read from the other (first) memory chips 302-1. Stated differently, the processor 304 may cause the second memory chips 302-2 to be and remain inactive in a read operation, until an error is detected in the data 324 stored in the first memory chips 302-1.

Accordingly, if the error detection does not indicate an error condition, in a further (e.g., third) read operation, the processor 304 may again read data from the first memory chips 302-1 while leaving out the second memory chips 302-2. Illustratively, the processor 304 may again access the first memory chips 302-1 (illustratively, the data stored therein) and may refrain from accessing the second memory chips 302-2 (e.g., the same as in the first instance, or different memory chips among the plurality of memory chips 302). Illustratively, in the further read operation the processor 304 may still cause one or more memory chips 302-2 to be or to remain in a disabled state and to ignore the further read operation.

In some embodiments, in the case that the error detection 332 indicates the presence of an error in the data 324, the processor 304 may carry out an error correction (e.g., as step 360 of the method 310), after having carried out the second read operation 344 to read the data 326 from the second memory chips 302-2, as shown in **FIG. 3B** and **FIG. 3C****.**

In this regard, although in principle the memory chips 302 may store any suitable type of data, in a convenient configuration the second memory chips 302-2 (e.g., the single second memory chip 302-2) may store as data 326 redundancy data associated with the data 324 stored in the first memory chips 302-1. The term "redundancy data" may describe any type of data suitable to provide data reliability and data integrity, e.g., any type of data that allows to correct errors in (other) data, and/or any type of data that allows to detect errors in (other) data. For example, redundancy data may include redundant bits (e.g., parity bits, or ECC bits) associated with the data.

Accordingly, as shown in FIG. 3B, after having detected the error condition 342, and after having read out the additional data 326 (illustratively, the redundancy data 326) from the second memory chips 302-2, the processor 304 may carry out an error correction operation 362 to correct the data 324 of the first memory chips 302-1. For the error correction operation 362, the processor 304 may use the redundancy data from the second memory chips 302-1, together with the data 324 of the first memory chips 302-1. In this regard, the error correction operation 362 may include any suitable method or algorithm for correcting errors in the data 324. For example, the error correction operation 362 may include using error correction codes (e.g., Hamming code), Reed-Solomon code, and the like. As a result of the error correction operation 362, the processor 304 may obtain corrected data 364.

Considering for example the use of Hamming code, the approach proposed herein may be understood as a dynamic adaptation of the Hamming distance, in which the Hamming distance is adapted by enabling the reading of data 326 from the second memory chips 302-2 in case of an error.

In some embodiments, as shown in FIG.3C, the redundancy data associated with the data 324 stored in the first memory chips 302-1 may be split between the second memory chips 302-2 and at least one of the first memory chips 302-1. Illustratively, at least one of the first memory chips 302-1 may include, as data 324-1 a first portion of the redundancy data for carrying out the error correction operation 362, and the second memory chips 302-2 (e.g., the single second memory chip 302-2) may store a second portion of the redundancy data for carrying out the error correction operation 362. It is understood that the redundancy data may be split over more than two memory chips 302.

In this scenario, the processor 304 may read the first portion of the redundancy data during the first read operation 322. For example, the processor 304 may use the first portion of the redundancy data for the error detection 332. In this regard, the first portion of the redundancy data may be sufficient to enable the error detection 332 but may be insufficient to enable the error correction operation 362.

For the error detection 332, the processor 304 may thus use the first portion of the redundancy data together with the remaining data 324 of the first memory chips 302-1. As an example, the first portion of the redundancy data may include ECC parity, and processor 304 may use the data 324 with the ECC parity for the error detection 332. As an example, the processor 304 may calculate the syndrome based on the data 324 and the first portion 324-1 of the redundancy data, and then use the syndrome together with the second portion of the redundancy data to identify the error locations in the error correction operation 362.

Thus, the first read operation 322 may allow the processor 304 to check for the presence of errors, but for correcting the errors the processor 304 may still read out the further data 326 from the second memory chips 302-2. In this configuration, the processor 304 may carry out the error correction operation 362 using both the redundancy data stored in the second memory chips 302-2 and the redundancy data stored in the at least one first memory chip 302-1 (together with the remaining data 324 from the first memory chips 302-1). As a result of the error correction operation 362, the processor 304 may obtain corrected data 364.

Considering the configuration in which the memory chips 302-2 that are disabled during the read operation are dynamically selected, the selection may be among the memory chips 302 that store redundancy data. For example, during a first instance of method 310, the memory chip 302 storing the first portion of the redundancy data may be disabled, with the remaining (first) memory chips 302-1 being enabled (including the memory chip storing the second portion of the redundancy data), and during a second subsequent instance of the method 310, the memory chip 302 storing the second portion of the redundancy data may be disabled with the remaining memory chips 302-1 being enabled (including the memory chip storing the first portion of the redundancy data), etc.

In some embodiments, after having carried out the error correction operation 362, the processor 304 may write the corrected data 364 back to the memory chips 302. In this regard,

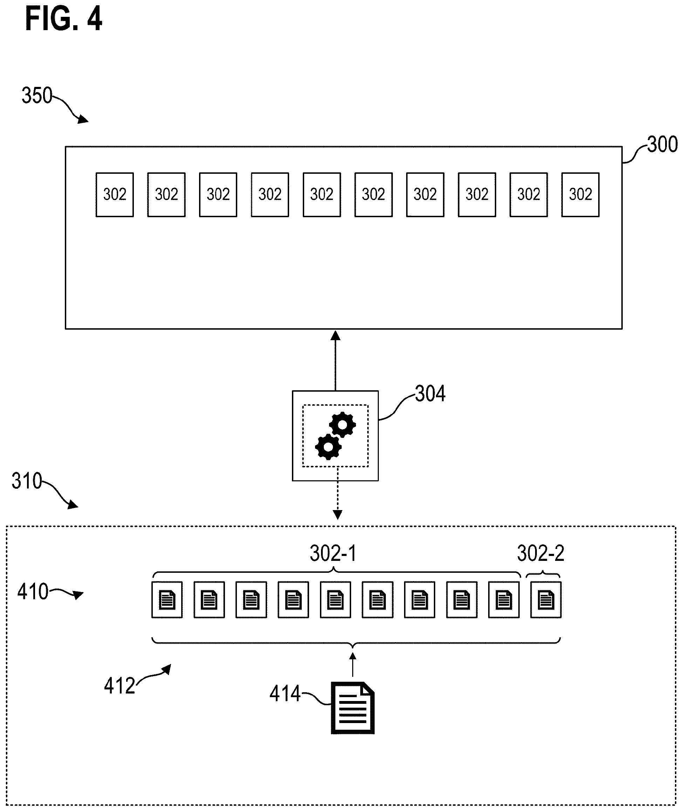

FIG. 4 shows in general a write operation 412 (e.g., as step 410 of the method 310), in a schematic representation.

In this regard, the processor 304 may carry out a write operation 412 to write data 414 in all the memory chips 302. Illustratively, for the write operation 412 the processor 304 may access both the first memory chips 302-1 and the second memory chips 302-2, e.g., both groups of memory chips 302-1, 302-2 may be enabled for the write operation 412 (e.g., via a corresponding chip select signal).

The write operation 412 may be for writing any type of data 414. For example, the data 414 may include the data that were read from the first memory chips 302-1 and corrected via the error correction operation 362 (i.e., the corrected data 364). For example, the data 414 may include data (e.g., application data) to be written in some of the memory chips 302 and redundancy data to be written in some other of the memory chips 302.

For example, the write operation 412 may include writing data in the first memory chips 302-1, and writing in the second memory chips 302-2 redundancy data associated with the data written in the first memory chips 302-1. For example, a first portion of the redundancy data may be written in at least one of the first memory chips 302-1, and a second portion of the redundancy data may be written in the second memory chips 302-2.

**FIG.** 5 shows a schematic flow diagram 500 illustrating the exchange of information between the processor 304 and the memory module 300.

The processor 304 may send a first readout signal 502 to the memory module 300 to carry out the first read operation 322. The first readout signal 502 may be a control signal that controls the memory module 300 in such a way that only the first memory chips 302-1 participate to the first read operation 322. As mentioned above, the first readout signal 502 may include a chip select signal, e.g., a first chip select signal for activating the first memory chips 302-1 and a second chip select signal for de-activating the second memory chips 302-2.

The processor 304 may then receive the data 324 from the first memory chips 302-1 and carry out the error detection 332, as discussed above. In case an error is detected, the processor 304 may send a second readout signal 504 to the memory module 300 to carry out the second read operation 344. The second readout signal 504 may be a control signal that controls the memory module 300 in such a way that at least the second memory chips 302-2 participate to the second read operation 344 (e.g., together with all or some of the first memory chips 302-1). As mentioned above, the second readout signal 504 may include a chip select signal, e.g., a second chip select signal for activating the second memory chips 302-2 and, optionally, a first chip select signal for activating the first memory chips 302-1. The processor 304 may then receive the data 324, 326 from the memory chips 302-1, 302-2 and, in some aspects, carry out the error correction operation 362, as discussed above.

In some aspects, the processor 304 may further carry out a write operation 412 to write data 414 (e.g., the corrected data 364, e.g., redundancy data) in the memory chips 302-1, 302-2. Although not shown, for the write operation 412 the processor 304 may send a write signal to the memory module 300, e.g., a third control signal to control the memory module 300 in such a way that both the first memory chips 302-1 and the second memory chips 302-2 participate to the write operation 412. For example, the write signal may include a chip select signal, e.g., a first chip select signal for activating the first memory chips 302-1 and a second chip select signal for activating the second memory chips 302-2.

**FIG. 6A, FIG. 6B,** and **FIG. 6C** illustrate further aspects of a memory module 600. The memory module 600 may generally be configured as the memory module 200, 300 and may include a plurality of memory chips 602.

In general, as shown in the configuration 600a in FIG. 6A, the memory module 600 may include a buffer circuit 604 (e.g., a buffer chip). The buffer circuit 604 may be configured to receive control signals 612 (e.g., from a processor 304, e.g., from a motherboard) and regulate access to the memory chips 602 according to the received control signal 612. For example, the buffer circuit 604 may receive, as control signal 612, a readout signal to carry out a read operation and enable or disable the memory chips 602 according to the read operation to be carried out. As another example, the buffer circuit 604 may receive, as control signal 612, a write signal to carry out a write operation. As mentioned above, the control signal 612 may be a chip select signal. For example, the buffer circuit 604 may be configured as a register clock driver.

As shown in the configuration 600b in FIG. 6B, the memory module 600 may include a plurality of input pins 610, illustratively a plurality of "fingers", via which the memory module 600 may be coupled with external entities (e.g., with the processor 304). For example, the buffer circuit 604 may receive the control signal 612 at one of the input pins 610.

In the configuration in FIG. 6B, the memory module 600 may include a single input pin for receiving the control signal 612 (e.g., a single chip select pin for receiving a chip select signal). For example, in this case the buffer circuit 604 may add an additional bit to the chip select encoding, and may output an extra set of chip select signals for the memory chips 602 to be disabled in the (first) read operation (e.g., an extra set of chip select signals for the tenth chip of a rank). For example, the extra bit may be sampled on a different clock edge with respect to the bit for enabling the other memory chips 602 to participate in the (first) read operation.

In some aspects, as shown in the configuration 600c in FIG. 6C, the memory module 600 may include an additional input pin for receiving an additional control signal 612-2. Illustratively, the memory module 600 may include a first input pin coupled with one or more first memory chips 602 for receiving a first control signal 612-1, and a second input pin coupled with one or more second memory chips 602 (e.g., with a single second memory chip 602) for receiving a second control signal 612-2. For example, the memory module 600 may include a first chip select pin to receive a first chip select signal 612-1 directed to the first memory chips 602 and a second chip select pin to receive a second chip select signal 612-2 directed to the second memory chips 602. In this scenario, rather than an extra bit in the encoding, the disabling of the memory chips 602 for a read operation is obtained by the extra chip select signal (e.g., coming from the processor 304).

In particular, the memory module 600 may include an additional (second) chip select pin coupled with the memory chip 602 configured to store redundancy data. For example, the additional (second) chip select is coupled with the memory chip 602 storing a (second) portion of the redundancy data, while another memory chip coupled to the other (first) chip select pin is configured to store another (first) portion of the redundancy data.

Illustratively, the buffer circuit 604 (e.g., the RCD) may have an additional chip select input to switch between activating only some of the memory chips 602 for a read operation or all of the memory chips 602 for a read operation.

Unless explicitly specified, the term "transmit" encompasses both direct (point-to-point) and indirect transmission (via one or more intermediary points). Similarly, the term "receive" encompasses both direct and indirect reception.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "at least one" and "one or more" may be understood to include any integer number greater than or equal to one, i.e., one, two, three, four, [...], etc. The term "a plurality" or "a multiplicity" may be understood to include any integer number greater than or equal to two, i.e. two, three, four, five, [...], etc. The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of listed elements.

The terms "processor" as used herein may be understood as any kind of technological entity that allows handling of data. The data may be handled according to one or more specific functions that the processor execute. Further, a processor as used herein may be understood as any kind of circuit, e.g., any kind of analog or digital circuit. A processor may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions may also be understood as a processor. It is understood that any two (or more) of the processors detailed herein may be realized as a single entity with equivalent functionality or the like, and conversely that any single processor detailed herein may be realized as two (or more) separate entities with equivalent functionality or the like.

## Claims

1. A method of operating a memory module, wherein the memory module comprises a plurality of memory chips, wherein the method comprises:
carrying out a first read operation, wherein the first read operation comprises: reading data from one or more memory chips among the plurality of memory chips while leaving out from the first read operation one or more further memory chips among the plurality of memory chips;
carrying out an error detection on the data from the one or more memory chips; and
if the error detection indicates an error condition of the data from the one or more memory chips, carrying out a second read operation, wherein the second read operation comprises reading data from the one or more further memory chips.

2. The method according to claim 1,
wherein the data stored in the one or more further memory chips include redundancy data associated with the data stored in the one or more memory chips.

3. The method according to claim 2, further comprising:
if the error detection indicates an error condition of the data from the one or more memory chips, carrying out a correction operation to correct the data stored in the one or more memory chips using the redundancy data from the one or more further memory chips.

4. The method according to any one of claims 1 to 3,
wherein the data stored in at least one of the one or more memory chips comprise a first portion of redundancy data associated with the data stored in the one or more memory chips,
wherein the data stored in the one or more further memory chips comprise a second portion of the redundancy data associated with the data stored in the one or more memory chips; and
wherein the method further comprises, if the error detection indicates an error condition of the data from the one or more memory chips, carrying out a correction operation to correct the data stored in the one or more memory chips using the first portion of the redundancy data from the at least one of the one or more memory chips and the second portion of the redundancy data from the one or more further memory chips.

5. The method according to any one of claims 1 to 4, further comprising:
carrying out a write operation, the write operation comprising: accessing the one or more memory chips and the one or more further memory chips to write data in the one or more memory chips and in the one or more further memory chips;
preferably wherein the data written in the one or more further memory chips comprise redundancy data associated with the data written in the one or more memory chips.

6. The method according to claim 5,
wherein the data written in at least one memory chip of the one or more memory chips comprise a first portion of redundancy data associated with the data written in the one or more memory chips, and
wherein the data written in the one or more memory chips comprise a second portion of the redundancy data associated with the data written in the one or more memory chips.

7. The method according to any one of claims 1 to 6,
wherein the first read operation comprises: enabling the one or more memory chips for the first read operation via a chip select signal; and disabling the one or more further memory chips for the first read operation via a further chip select signal; and
wherein the second read operation comprises enabling the one or more further memory chips for the second read operation via the further chip select signal.

8. The method according to any one of claims 1 to 7, further comprising:
if the error detection does not indicate an error condition of the data from the one or more memory chips, carrying out a third read operation, the third read operation comprising: reading data from the one or more memory chips among the plurality of memory chips, while leaving out from the third read operation the one or more further memory chips among the plurality of memory chips.

9. The method according to any one of claims 1 to 8,
wherein the error condition includes at least one bit error in the data from the one or more memory chips.

10. The method according to any one of claims 1 to 9,
wherein the one or more further memory chips comprise a single memory chip among the plurality of memory chips.

11. The method according to any one of claims 1 to 10,
wherein the memory module is configured as a dynamic random-access memory, DRAM, module.

12. A computing system comprising:
a memory module comprising a plurality of memory chips; and
a processor configured to:
carry out a first read operation, wherein for the first read operation the processor is configured to: read data from one or more memory chips among the plurality of memory chips while leaving out from the first read operation one or more further memory chips among the plurality of memory chips;
carry out an error detection on the data from the one or more memory chips:
carry out a second read operation, if the error detection indicates an error condition of the data from the one or more memory chips,
wherein for the second read operation the processor is configured to read data from the one or more further memory chips.

13. The computing system according to claim 12,
wherein the one or more further memory chips are configured to store redundancy data associated with the data stored in the one or more memory chips;
preferably wherein the processor is further configured to carry out a correction operation to correct the data stored in the one or more memory chips using the redundancy data from the one or more further memory chips, if the error detection indicates an error condition of the data from the one or more memory chips.

14. The computing system according to any one of claims 12 or 13,
wherein the processor is further configured to carry out a write operation,
wherein for the write operation the processor is configured to access the one or more memory chips and the one or more further memory chips to write data in the one or more memory chips and in the one or more further memory chips;
preferably wherein the data written in the one or more further memory chips comprise redundancy data associated with the data written in the one or more memory chips.

15. The computing system according to any one of claims 12 to 14,
wherein for the first read operation the processor is further configured to: enable the one or more memory chips for the first read operation via a chip select signal; and disable the one or more further memory chips for the first read operation via a further chip select signal; and
wherein for the second read operation the processor is further configured to enable the one or more further memory chips for the second read operation via the further chip select signal.
